# EUROPEAN PATENT SPECIFICATION

(11) **EP 2 804 800 B1**
(45) Date of publication and mention of the grant of the patent: **01.03.2017**
(21) Application number: 12813516.7
(22) Date of filing: 05.12.2012
(51) Int. Cl.: B62B 1/26, B62B 1/22, A01J 5/003, B62B 5/06

(54) **TROLLEY FOR A MILKING APPARATUS**
WAGEN FÜR EINE MELKMASCHINE
CHARIOT POUR APPAREIL DE TRAITE

(30) Priority: 20.01.2012 IT TO20120041
(43) Date of publication of application: 26.11.2014
(73) Proprietor: Interpuls S.P.A., 42020 Albinea (RE) (IT)
(72) Inventor: SICURI, Roberto, I-43100 Parma (IT); NICOLINI, Gabriele, I-42020 Albinea (RE) (IT)
(74) Representative: Robba, Pierpaolo
(86) International application number: PCT/IB2012/056975
(87) International publication number: WO 2013/108095

(56) References cited:
- CH-A- 394 688
- CH-A5- 687 731
- DE-U- 1 816 144
- DE-U- 1 979 390
- DE-U1- 9 305 052
- DE-U1- 20 318 152
- FR-A- 1 463 615
- US-A- 2 361 970
- US-A- 4 034 711

## Description

### Technical Field

The present invention refers to a trolley for a milking apparatus as well as to a milking apparatus comprising said trolley.

### Prior Art

For milking small groups of animals, either sheep and goats or cattle, especially in emerging countries, there is a widespread use of an apparatus complete with all the necessary components for effecting milking and mounted on a trolley.

A trolley for a milking apparatus of the kind presently known essentially includes a wheeled frame which is comprised of steel bars joined together by welding and on which there are mounted:
- a vacuum pump (usually of the vane type) including an electric motor;
- a vacuum reservoir including a moisture trap;
- a vacuum adjustment valve;
- one or two milk vessel(s) provided with a lid;
- one or two arms supporting the milking units;
- one or two milking units;
- connection lines for milk, vacuum and pulsation signal;
- shut-off valves;
- at least a pair of wheels mounted on a common axle;
- a handle for allowing handling of the trolley by the user.

Such a trolley is, e.g. known from US 2 361 970 which discloses a trolley according to the preamble of claim 1.

The frame-type supporting structure with steel bars joined together by welding has a series of drawbacks.

The main drawback is that this structure does not provide adequate protection to the milking apparatus components mounted thereon. Several components of the milking apparatus are therefore exposed to accidental impacts and to possible damages deriving therefrom.

Furthermore, as the structure with metal frame is usually quite simple, it does not allow a rational, ergonomic arrangement of the components constituting the milking apparatus.

The metal frame-type structure further has high manufacturing costs and times and a remarkable weight and it is also subject to wear by corrosion when used in the presence of aggressive substances.

The main object of the present invention is therefore to provide a trolley for a milking apparatus which overcomes the drawbacks of the prior art.

Another object of the invention is to provide a trolley of the aforesaid type that can be manufactured in a cost-effective way and can therefore be produced on an industrial scale at convenient costs.

### Description of the Invention

These and other objects are attained with the trolley as claimed in the appended claims.

According to a preferred embodiment of the invention the trolley essentially comprises a supporting structure formed by plastic sections joined together, which give to the whole trolley a substantially "cradle-like" form so as to carry the components of the milking apparatus and at least a vessel adapted for collecting the milked milk and comprising a large handle for holding and lifting the trolley for the purpose of handling the same.

Always according to a preferred embodiment of the invention, the supporting structure is comprised mainly of three different plastic sections that are assembled together by means of fixing means preferably consisting of metal tie rods, so as to obtain a continuous structure having a geometry suitable for the intended use. Advantageously, these sections have in common the plastic material they are made of as well as the technique for manufacturing them, which is the "plastics blow-molding" technique.

Advantageously, thanks to the blow-molding technique it is possible to obtain geometrically complex parts at very convenient costs. The inner cavity provided in the plastic sections allows to obtain a supporting structure that can also functionally cooperate with the components of the milking apparatus carried on the trolley. Advantageously, moreover, the presence of cavities inside the sections of the supporting structure further confers to the trolley high strength and robustness with limited weight.

According to the invention, one of the cavities is used as vacuum reservoir, which therefore has a storage capacity remarkably greater than the reservoirs usually associated to conventional trolleys having a frame made by metal bars. In this way better performances of the milking apparatus are obtained and the whole outer appearance of the trolley is improved.

The provision of a supporting structure divided in sections, preferably three sections, made of plastics further allows to advantageously obtain a simplification in manufacture, transportation and assembly.

The sections of the structure are firmly assembled together by means of fixing means such as screws, tie rods and metal inserts, which allow to obtain a final single-piece chassis having properties of high resistance to the stresses undergone by the structure itself during use. In an alternative embodiment, the trolley structure can incorporate only two blocks, instead of three, but this will involve a more complex blow-molding and higher manufacturing costs.

Advantageously, moreover, dividing the trolley structure in three main sections allows to optimize storage and transport of the trolley, for instance by providing to mount the upper body only upon arrival at destination or upon sale. This solution allows to remarkably optimize the overall size of the packaging with respect to the one required for a conventional trolley comprised of a metal frame, and this factor results in a remarkable saving on transportation costs.

Advantageously, the trolley structure comprises a handle having geometry and size so as to allow to hold the same with both hands and to distribute the load borne by the user in a balanced way on both his arms, thus making handling of the trolley extremely easy.

In a further alternative embodiment, it is provided that the handle, instead of being integrated in the structure, is attached to the structure, preferably to its upper body and in such a way that inclination of the handle and consequently its height with respect to the ground can be adjusted. This solution makes it possible to adjust positioning of the handle according to each user's needs.

### Brief Description of the Figures

Some embodiments of the invention will be described below with reference to the accompanying drawings, in which:

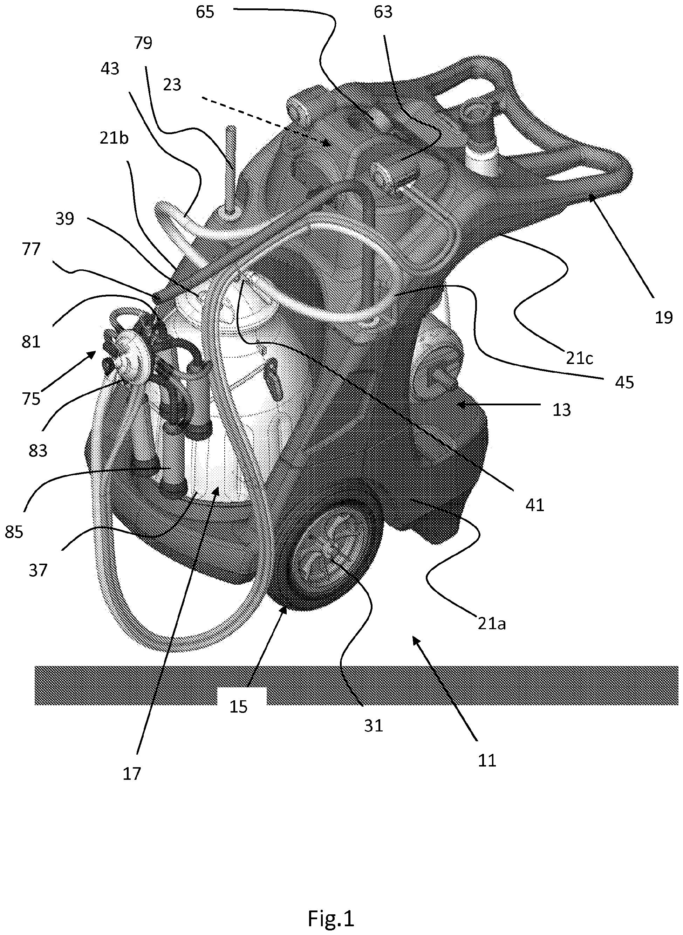

- Figure 1 is a perspective front view of the trolley according to the invention, on which a milking apparatus is mounted;

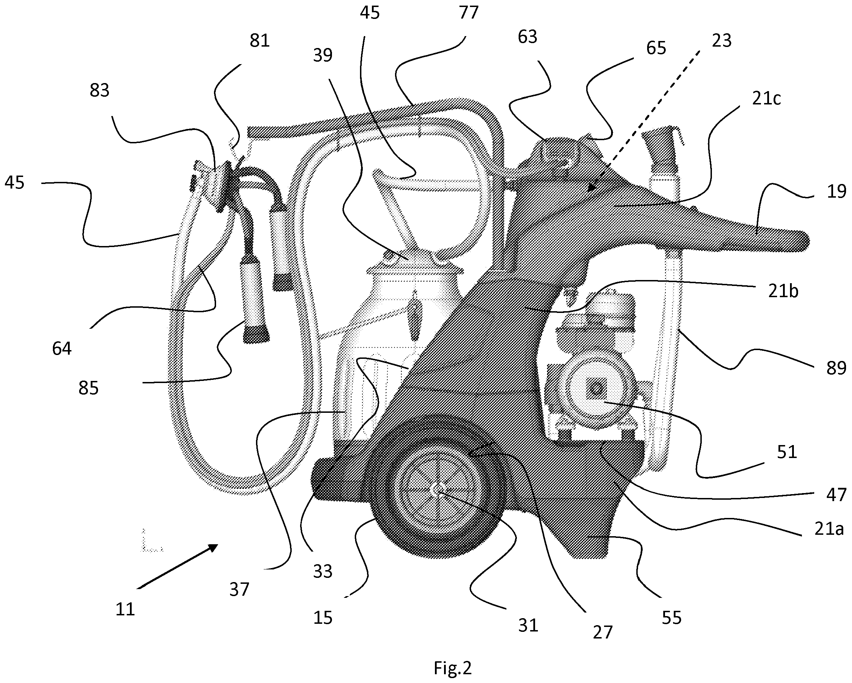

- Figure 2 is a side view of the trolley of Figure 1;

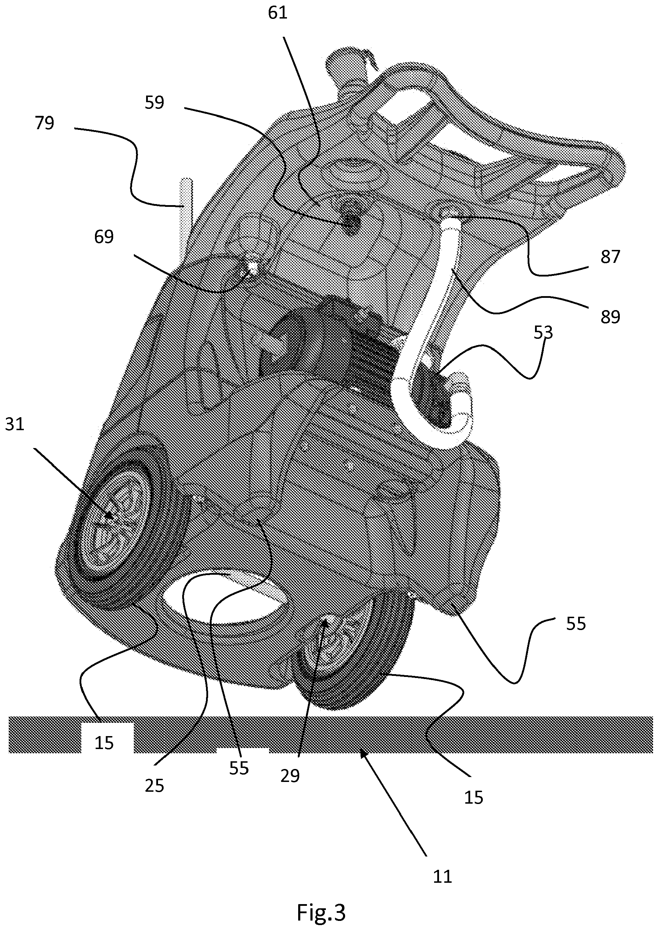

- Figure 3 is a perspective rear view of the trolley of Figure 1 from which some assemblies of the milking apparatus have been removed;

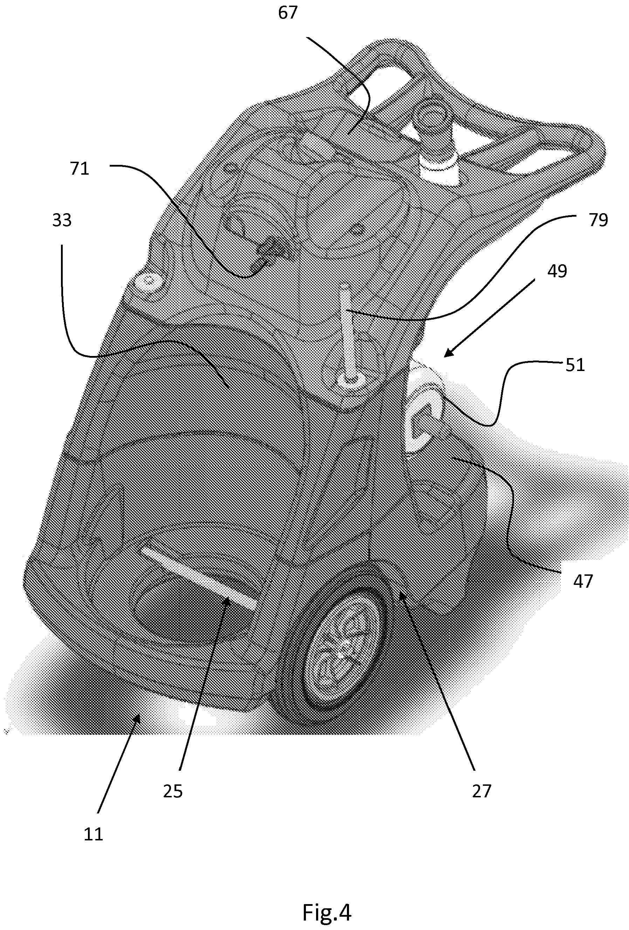

- Figure 4 is a perspective front view of the trolley of Figure 3;
- Figure 5 shows a detail of the means for fixing the intermediate section to the lower section;
- Figures 6A and 6B show corresponding details of the means for fixing the upper section to the intermediate section;
- Figure 7 is a side view of the trolley of an alternative embodiment, from which the handle has been removed;
- Figures from 8A to 8C are side views of the trolley of Figure 7 showing respective configurations of the handle.

### Description of a Preferred Embodiment

With reference to Figures from 1 to 6, the trolley according to the invention has been generically indicated with 11.

The trolley 11 comprises a supporting structure 13 which is suitable for carrying the components of a milking apparatus 17 and is equipped with wheels 15 and a handle 19 for allowing the trolley 11 to be transported by a user.

According to the invention, the supporting structure 13 is obtained by combining modules or separate sections that are joined together by means of fixing means. Always according to the invention, the sections are made of plastic material, preferably by using the technique of plastics blow-molding, and they are firmly joined together by means of fixing means preferably made of metal.

In the embodiment shown, the structure 13 is advantageously obtained by combining three sections. In this embodiment, in the trolley 11 when it rests with its wheels 15 on the ground there are, seen from below upwards, a first lower section or base 21a, a second section or intermediate section 21b and a third section or upper section 21c.

Still according to the invention, at least one of the sections forming the structure 13, namely the section 21c in the example shown, defines in its inside a cavity 23 capable of cooperating with the vacuum circuit of the milking apparatus 17 carried by the structure 13 itself.

Base 21a includes a rigid axle 25, preferable made of metal, which crosses transversely the body of base 21a along a corresponding seat formed in the lower part thereof and to which the wheels 15 are associated. The pair of wheels 15 are rotatably associated at the opposite ends of axle 25, at the wheel arches 27 defined in the body of the base 21a itself. A pair of spacers 29 are located between wheels 15 and base 21a and metal pins 31 radially inserted at the ends of axle 25 in corresponding radial holes prevent the wheels 15 from slipping off the axle 25.

The front part of base 21a comprises a hemicylindrical seat 33 defining a corresponding housing for the vessel that contains the milked milk. This vessel usually consists of a bucket 37, usually cylindrical, comprising a lid 39 provided with nipples 41 for connection with milk lines 43 and vacuum lines 45.

The seat 33 develops vertically with a wrapping arched geometry so as to surround a portion of the vessel 37, which is therefore firmly housed on the trolley 11.

The rear part of base 21a comprises a bracket 47 dimensioned so as to be capable of housing the vacuum-production unit 49 comprising the electric motor 51 and the vacuum pump 53 and typically weighing some tens of kg, for instance approximately 20 kg.

The bracket 47 preferably includes through-bores suitable for securing the electric motor 51, conveniently isolated by corresponding damping elements made of rubber and having an anti-vibration function, in order to avoid transmitting to the structure 13 the inevitable vibrations generated by unit 49 when motor 51 is running.

Base 21a further comprises, below bracket 47, a pair of feet 55 allowing the structure 13 to rest on the ground when the trolley 11 is not being displaced. Said feet 55 have such a length that, when the structure 13 is in rest condition, the base of the seat 33 is essentially parallel to the ground on which both the wheels 15 and the lower ends of feet 55 are resting.

Advantageously, it is preferable to provide a pair of feet 55 instead of a single central foot, in order to confer more stability to the trolley 11 in any conditions of irregularity of the ground on which the trolley rests.

Advantageously, according to the invention the barycenter of unit 49 is located at such a distance from axle 25 of the wheels 15 as to prevent the whole structure 13 from overturning forward when the seat 33 is housing a bucket 37 full at its maximum capacity, typically of 30 liters, without, however, exerting a heavy load on the user's arms during handling.

According to the invention, the intermediate section 21b preferably has a lower part that is coupled exactly with the free upper part of the base 21a described above, so as to form with it an assembly having continuity of profile.

The front part of the intermediate section 21b has a concave arched shape in a horizontal plane defining an upper portion of the hemicylindrical seat 33 and has therefore a continuity of shape with respect to the portion of seat 33 defined in the base 21a.

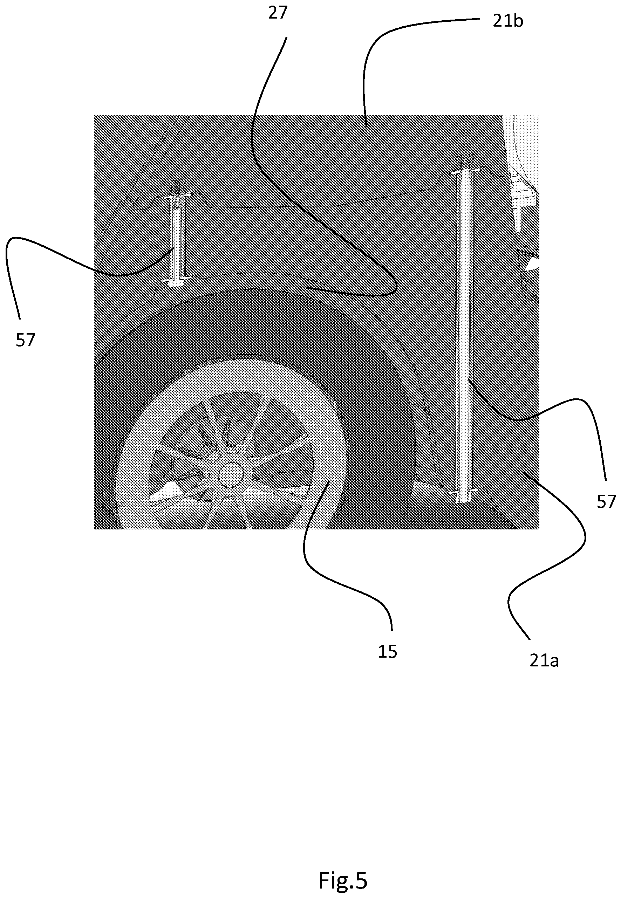

The intermediate section 21b is firmly joined, preferably in a detachable way, to the lower section or base 21a. Referring particularly to Figure 5, in the example shown, the connection between sections 21a and 21b is obtained by means of vertical metal tie rods 57, preferably four, arranged over the perimeter of the two sections 21a, 21b, that are therefore rigidly joined to each other.

The upper section 21c is firmly associated, preferably in a detachable way, to the intermediate section 21b and has an essentially arched shape in a vertical plane extending toward the rear part of the trolley 11, above the bracket 47 which houses the unit 49 thus protecting said unit against impacts.

In the embodiment shown, this upper section 21c defines at its inside the cavity 23 which is associated to the vacuum circuit of the milking apparatus 17 and thus serves as vacuum reservoir for this apparatus 17.

According to a preferred embodiment of the invention, the components of the milking apparatus are associated to the upper section 21c, namely:
- a vacuum adjustment valve 59, advantageously arranged in a corresponding recess 61 provided in the lower part of section 21c and therefore hardly accessible, so as to be more protected against accidental impacts;
- at least one pulsator 63, for instance of the pneumatic type, communicating with the cavity 23 and preferably mounted on the upper section 21c as in the example shown;
- a vacuum gauge 65, provided at the center of the structure 13 and arranged in a niche 67 having such a shape as to protect it against accidental impacts or collisions, while remaining well visible for the user to check the correct set vacuum value;
- a valve 69 for discharging the moisture that is formed inside the vacuum reservoir 23 during use;
- a tap 71 to which the line 43 is connected, the other end of which line is connected to the lid 39 arranged on the milk vessel 37, and having the purpose of feeding vacuum to said vessel, which in turn is connected to a milking unit 75;
- an arm 77, preferably made of metal, having an adequate shape, preferably an L-shape, hinged on a pin 79 extending vertically from the upper section 21c and at whose free end there is associated a hook 81 having the function of supporting the milking unit 75 when said unit is not in a milking phase. In the example shown, two pins 79 are provided for a corresponding pair of arms 77, only one of which is illustrated;
- a milking unit 75 that generally consists of a manifold 83 and four flexible sleeves 85 in the case of cattle milking or two flexible sleeves in the case of sheep and goat milking and is connected to the pulsator 63 by means of ducts 64;
- a nipple 87 which is located in the lower part of the upper section 21c and on which there is inserted the pipe 89 connecting the reservoir 23 to the vacuum pump 53, so that the pump can generate inside the reservoir the vacuum necessary for effecting milking.

According to the invention, the three sections 21a, 21b, 21c of the structure 13 are preferably obtained all by means of the plastics blow-molding technique, in order to obtain the complex shapes of the surfaces characterizing them, and are therefore hollow at their insides.

Advantageously, at least one of said cavities, namely the cavity 23 of the upper section 21c in the example shown, functionally cooperates with the milking apparatus carried on the trolley. Said cavity 23 extends for instance along the whole upper section 21c and also into the handle where integral with said section 21c as in the example shown, and therefore it has a great overall volume, which serves as vacuum reservoir or vacuum accumulator. In the example shown, said vacuum accumulator has a capacity of some tens of liters, for instance approximately 30 liters, remarkably higher than the conventional one mounted on conventional trolleys made of steel. Advantageously, the greater capacity of the vacuum reservoir confers more stability to the vacuum level during milking, thus improving quality thereof. Thus, unlike the other sections 21a, 21b that have a merely structural function, the upper section 21c has both a structural and an operational function with respect to the milking apparatus 17 carried on the trolley 11.

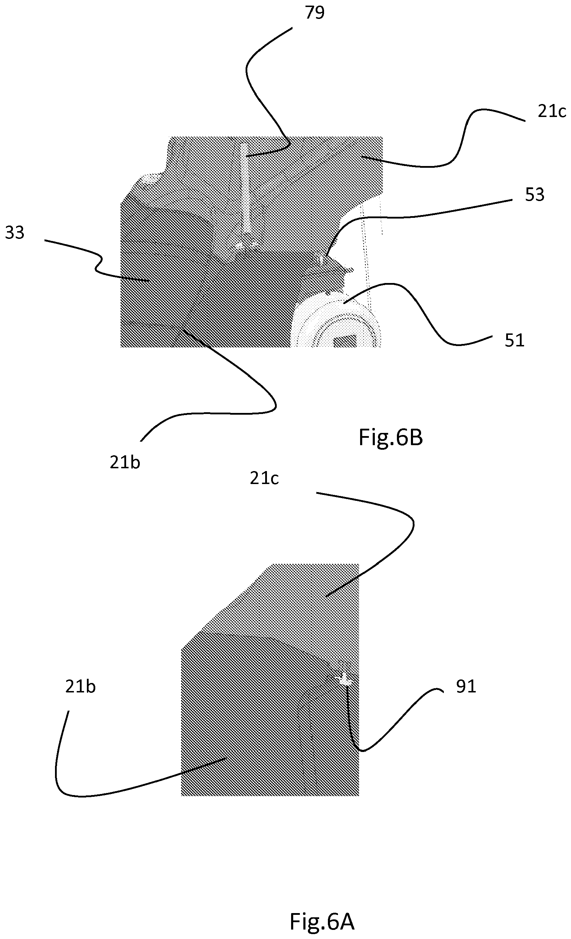

The lower part of the upper section 21c also exhibits a continuity of profile with respect to the intermediate section 21b on which the upper section 21c is fixed. Particularly with reference to Figures 6A and 6B, the upper section 21c is fixed to the pre-assembled body formed by the other two sections 21a, 21b by means of fixing elements, for instance the pin 79 on which the arm 77 pivots and screws 91, thus creating a complete structure from both the geometrical and the structural viewpoints.

Still referring to the example shown, the upper section 21c further has the handle 19 integral therewith, which extends transversely essentially for the whole width of the trolley 11 and generally defines a corresponding handlebar.

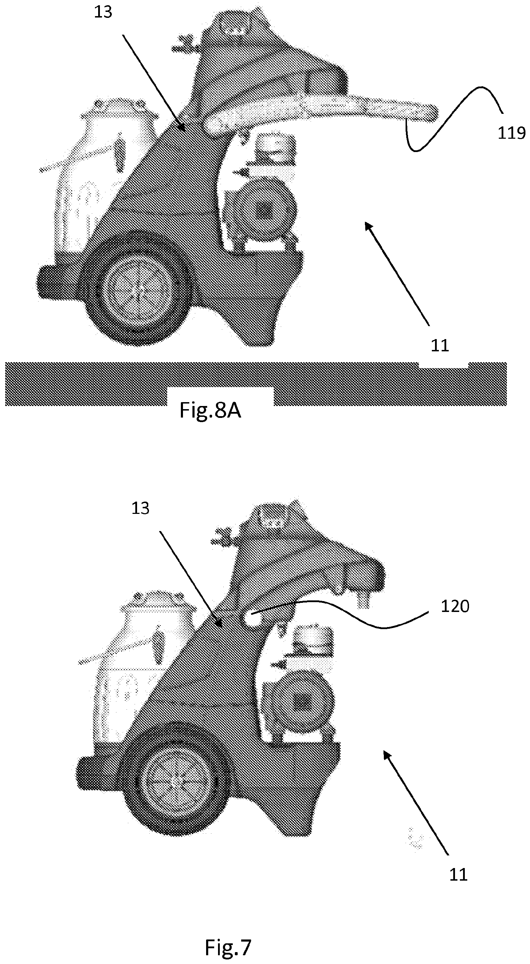

With reference to Figures 7 and 8A to 8C, an alternative embodiment is illustrated wherein the handle 119 consists of a single independent piece, preferably obtained with the same technique of plastics blow-molding.

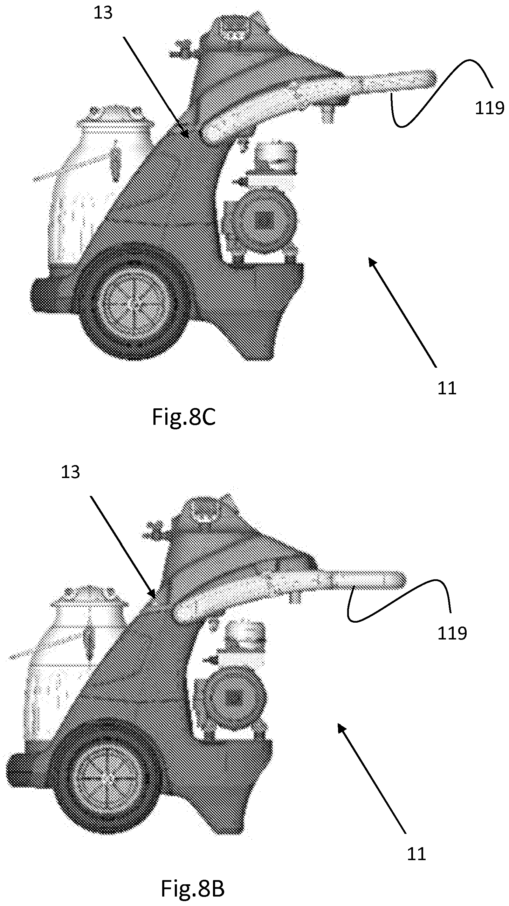

The handle 119 is hinged in a cylindrical transversal seat 120 provided between the intermediate section 21b and the upper section 21c. The inclination of the handle 119 can be advantageously adjusted by acting on fixing screws (not illustrated) provided for securing the handle 119 to the structure 13. Advantageously, according to this alternative embodiment the handle 119 can take several configurations, as can be seen when comparing the drawings of Figure 8A, 8B and 8C, which show a lower, an intermediate and an upper position for the handle 119, respectively. In this way the handle 119 can take a variable height with respect to the ground, for instance over a range of approximately 5-10 cm, and be adapted to users of different height.

Although the trolley 11 has been described with reference to an apparatus equipped with a single milk vessel 37, it will be possible to provide a variant of the trolley capable of carrying a pair of separate vessels.

The trolley as described and illustrated can be subject to several modifications and variants falling within the same scope of the invention.

## Claims

1. Trolley (11) for a milking apparatus (17), said trolley comprising a supporting structure (13) capable of carrying a milking apparatus (17) and provided with wheels (15) and a handle (19; 119) for allowing the trolley to be transported by a user, wherein the supporting structure (13) comprises at least two sections (21a, 21b, 21c) firmly associated to each other, at least one of which defining at its inside a cavity (23) capable of functionally cooperating with the vacuum circuit of the milking apparatus (17), the trolley being **characterized in that** said cavity (23) defines a corresponding vacuum reservoir for said milking apparatus (17).

2. Trolley according to claim 1, wherein the supporting structure (13) comprises a lower section (21a), an intermediate section (21b) and an upper section (21c), the intermediate section (21b) being firmly associated to the lower section (21a) and the upper section (21c) being firmly associated with the intermediate section (21b).

3. Trolley according to claim 2, wherein the cavity (23) is defined at the upper section (21c).

4. Trolley according to any of claims 2 or 3,
wherein
the handle (19; 119) is integral with the upper section (21c).

5. Trolley according to any of claims 1 to 3, wherein the handle (19; 119) is made by a single independent piece hinged in a cylindrical transversal seat (120) obtained in the supporting structure (13) and is adjustable in its height.

6. Trolley according to claim 2, wherein a front part of the lower section (21a) comprises a hemicylindrical seat (33) defining a corresponding housing for a vessel (37) for collecting the milked milk and wherein said seat (33) develops vertically with a wrapping arched geometry in a horizontal plane, so as to surround a portion of the vessel (37).

7. Trolley according to claim 6, wherein the front part of the intermediate portion (21b) has a concave arched shape which defines an upper portion of the hemicylindrical seat (33) and has therefore a continuity of shape with respect to the portion of the seat (33) defined in the lower section (21a).

8. Trolley according to claim 2, wherein the rear part of the lower section (21a) comprises a bracket (47) dimensioned so as to be capable of carrying a vacuum-production unit (49) comprising an electric motor (51) and a vacuum pump (53).

9. Method of making a trolley for a milking apparatus as claimed in any of claims 1 to 8,
wherein the steps are
provided of:
- obtaining by means of the plastics blow-molding technique at least two sections of supporting structure (13) for said trolley (11), at least one of said sections defining at its inside a corresponding cavity (23) capable of functionally cooperating with the vacuum circuit of the milking apparatus;
- firmly associating said sections to each other so as to obtain the supporting structure (13);
- carrying on said structure (13) a milking apparatus (17) comprising a vacuum pump (53);
- associating said vacuum pump to said cavity (23) by means of a vacuum pipe (89).

## Patentansprüche

1. Wagen (11) für eine Melkvorrichtung (17), wobei der Wagen eine Stützstruktur (13) umfasst, die dazu in der Lage ist, eine Melkvorrichtung (17) zu tragen, und mit Rädern (15) und einem Handgriff (19; 119) versehen ist, um zu ermöglichen, dass der Wagen durch einen Benutzer befördert wird, wobei die Stützstruktur (13) wenigstens zwei Sektionen (21a, 21b, 21c) umfasst, die fest miteinander verknüpft sind, von denen wenigstens eine an ihrer Innenseite einen Hohlraum (23) definiert, der dazu in der Lage ist, funktionell mit dem Vakuumkreis der Melkvorrichtung (17) zusammenzuwirken, **dadurch gekennzeichnet, dass** der Hohlraum (23) ein entsprechendes Vakuumreservoir für die Melkvorrichtung (17) definiert.

2. Wagen nach Anspruch 1, wobei die Stützstruktur (13) eine untere Sektion (21a), eine Zwischensektion (21b) und eine obere Sektion (21c) umfasst, wobei die Zwischensektion (21b) fest mit der unteren Sektion (21a) verknüpft ist und die obere Sektion (21c) fest mit der Zwischensektion (21b) verknüpft ist.

3. Wagen nach Anspruch 2, wobei der Hohlraum (23) an der oberen Sektion (21c) definiert ist.

4. Wagen nach einem der Ansprüche 2 oder 3, wobei der Handgriff (19; 119) integral mit der oberen Sektion (21c) ist.

5. Wagen nach einem der Ansprüche 1 bis 3, wobei der Handgriff (19; 119) aus einem einzigen unabhängigen Stück besteht, das in einem zylindrischen quer verlaufenden Sitz (120) angelenkt ist, der in der Stützstruktur (13) erzielt ist, und in seiner Höhe einstellbar ist.

6. Wagen nach Anspruch 2, wobei ein vorderer Teil der unteren Sektion (21a) einen halbzylindrischen Sitz (33) umfasst, der ein entsprechendes Gehäuse für ein Gefäß (37) zum Sammeln der gemolkenen Milch definiert, und wobei der Sitz (33) in Vertikalrichtung in einer umhüllenden gewölbten Geometrie in einer horizontalen Ebene ausgebildet ist, um so einen Abschnitt des Gefäßes (37) zu umgeben.

7. Wagen nach Anspruch 6, wobei der vordere Teil der Zwischensektion (21b) eine konkave gewölbte Form hat, die einen oberen Abschnitt des halbzylindrischen Sitzes (33) definiert, und daher eine Kontinuität der Form in Bezug auf den Abschnitt des Sitzes (33), der in der unteren Sektion (21a) definiert wird, hat.

8. Wagen nach Anspruch 2, wobei der hintere Teil der unteren Sektion (21a) eine Stütze (47) umfasst, die so bemessen ist, dass sie dazu in der Lage ist, eine Vakuumerzeugungseinheit (49) zu tragen, die einen Elektromotor (51) und eine Vakuumpumpe (53) aufweist.

9. Verfahren zum Herstellen eines Wagens für eine Melkvorrichtung nach einem der Ansprüche 1 bis 8, wobei die Schritte durch Folgendes bereitgestellt werden:
- das Erzielen von wenigstens zwei Sektionen einer Stützstruktur (13) für den Wagen (11) mit Hilfe der Kunststoff-Blasformtechnik, wobei wenigstens eine der Sektionen an ihrer Innenseite einen entsprechenden Hohlraum (23) definiert, der dazu in der Lage ist, funktionell mit dem Vakuumkreis der Melkvorrichtung zusammenzuwirken,
- das feste Verknüpfen der Sektionen miteinander, um so die Stützstruktur (13) zu erzielen,
- das Befördern einer Melkvorrichtung 817), die eine Vakuumpumpe (53) umfasst, auf der Struktur (13),
- das Verknüpfen der Vakuumpumpe mit dem Hohlraum (23) mit Hilfe eines Vakuumrohrs (89).

## Revendications

1. Chariot (11) pour un appareil de traite (17), ledit chariot comprenant une structure de support (13) capable de porter un appareil de traite (17) et munie de roues (15) et d'une poignée (19 ; 119) pour permettre au chariot d'être manoeuvré par un utilisateur, la structure de support (13) comprenant au moins deux sections (21a, 21b, 21c) fermement associées l'une à l'autre, dont au moins une définit à son intérieur une cavité (23) capable de coopérer de façon fonctionnelle avec le circuit de vide de l'appareil de traite (17), le chariot étant **caractérisé par le fait que** ladite cavité (23) définit un réservoir de vide correspondant pour ledit appareil de traite (17).

2. Chariot selon la revendication 1, dans lequel la structure de support (13) comprend une section inférieure (21a), une section intermédiaire (21b) et une section supérieure (21c), la section intermédiaire (21b) étant fermement associée à la section inférieure (21a) et la section supérieure (21c) étant fermement associée à la section intermédiaire (21b).

3. Chariot selon la revendication 2, dans lequel la cavité (23) est définie à la section supérieure (21c).

4. Chariot selon l'une quelconque des revendications 2 ou 3, dans lequel la poignée (19 ; 119) est solidaire de la section supérieure (21c).

5. Chariot selon l'une quelconque des revendications 1 à 3, dans lequel la poignée (19 ; 119) est faite d'une seule pièce indépendante articulée dans un siège transversal cylindrique (120) obtenu dans la structure de support (13) et est ajustable en hauteur.

6. Chariot selon la revendication 2, dans lequel une partie avant de la section inférieure (21a) comprend un siège hémicylindrique (33) définissant un logement correspondant pour un récipient (37) pour collecter le lait trait, et ledit siège (33) se développant verticalement avec une géométrie arquée en enveloppement dans un plan horizontal, de façon à entourer une partie du récipient (37).

7. Chariot selon la revendication 6, dans lequel la partie avant de la partie intermédiaire (21b) a une forme arquée concave qui définit une partie supérieure du siège hémicylindrique (33) et a par conséquent une continuité de forme par rapport à la partie du siège (33) définie dans la section inférieure (21a).

8. Chariot selon la revendication 2, dans lequel la partie arrière de la section inférieure (21a) comprend une console (47) dimensionnée de façon à être capable de porter une unité de production de vide (49) comprenant un moteur électrique (51) et une pompe à vide (53).

9. Procédé de fabrication d'un chariot pour un appareil de traite selon l'une quelconque des revendications 1 à 8, dans lequel sont prévues les étapes :
- obtenir, au moyen de la technique de moulage par soufflage de matière plastique, au moins deux sections de structure de support (13) pour ledit chariot (11), au moins une des sections définissant à son intérieur une cavité correspondante (23) capable de coopérer de façon fonctionnelle avec le circuit de vide de l'appareil de traite ;
- associer fermement lesdites sections l'une à l'autre de façon à obtenir la structure de support (13) ;
- porter sur ladite structure (13) un appareil de traite (17) comprenant une pompe à vide (53) ;
- associer ladite pompe à vide à ladite cavité (23) au moyen d'un tuyau à vide (89).
